**Europäisches Patentamt**

**European Patent Office**

**Office européen des brevets**

(19)

(11) Publication number : **0 404 957 B1**

# (12) EUROPEAN PATENT SPECIFICATION

(45) Date of publication of patent specification :
24.03.93 Bulletin 93/12

(51) Int. Cl.⁵ : **A21D 8/02,** A21C 13/00,
// A21D6/00

(21) Application number : 89909867.7

(22) Date of filing : 31.08.89

(86) International application number :
PCT/JP89/00892

(87) International publication number :
WO 90/02488 22.03.90 Gazette 90/07

(54) PROCESS FOR FERMENTING BREAD DOUGH AND APPARATUS THEREFOR.

(30) Priority : 01.09.88 JP 219162/88

(43) Date of publication of application :
02.01.91 Bulletin 91/01

(45) Publication of the grant of the patent :
24.03.93 Bulletin 93/12

(84) Designated Contracting States :
DE FR GB

(56) References cited :
EP-A- 0 092 537
JP-B- 366 486
JP-C- 110 727

(73) Proprietor : **JAPAN OXYGEN CO. LTD.**
**16-7, Nishishinbashi 1-chome Minato-ku**
**Tokyo 105 (JP)**

(72) Inventor : **YAMAMOTO, Tatsuya Japan**
**Oxygen Co., Ltd.**
**16-7, Nishishinbashi 1-chome**
**Minato-ku Tokyo 105 (JP)**
Inventor : **ANDO, Toshihumi Japan Oxygen**
**Co., Ltd.**
**16-7, Nishishinbashi 1-chome**
**Minato-ku Tokyo 105 (JP)**

(74) Representative : **Patentanwälte TER MEER -**
**MÜLLER - STEINMEISTER & PARTNER**
**Mauerkircherstrasse 45**
**W-8000 München 80 (DE)**

## Description

Technical Field

The present invention relates to a method and an apparatus of fermenting dough in a bread-baking process. Particularly, this invention relates to a method and an apparatus of fermenting dough at a temperature lower than the normal fermentation temperature (30 to 38°C).

Background Art

Conventionally, fermentation of in a bread-baking process is conducted at a specific temperature and specific humidity. Recently, there proposed are a method of fermenting dough at a lower temperature (equal to or below 25°C) than the normal fermentation temperature (30 to 38°C) in order to make rich-flavored bread, and a frozen dough producing method of fermenting dough at a lower temperature than the normal one in order to cryopreserve the dough after fermentation.

In the conventional fermentation process, however, only the temperature and humidity in a fermenting vat are controlled as described above, and no particular attention has been given to the air composition.

Further, while the above fermentation method below 25°C is good for baking rich-flavored bread, it takes a long time to ferment dough, for example, 16 to 20 hours at 5°C, 6 to 8 hours at 10°C, and 2 to 3 hours at 20°C, and the volume of baked bread becomes smaller as a consequence. In order to prevent reduction in this volume, the amount of yeast is increased to thereby quicken fermentation. The resultant baked bread, however, is likely to have a yeast odor or the like remaining, thus losing its flavor.

Disclosure of the Invention

Accordingly, it is an object of the present invention to provide a method and an apparatus of fermenting dough, which can shorten the fermentation time as well as prevent the volume of bread from becoming smaller, can manufacture rich-flavored bread, and also can prevent reduction in the volume of bread after cryopreservation for frozen dough which is frozen after fermentation.

To achieve the above object, the method of the present invention is characterized by performing dough fermentation in an atmosphere of rich carbon dioxide, and is particularly characterized in that the temperature in the fermentation atmosphere is equal to or lower than 25°C and the pressure therein is slightly positive.

As described above, when dough is fermented in a carbon-dioxide rich atmosphere, externally-supplied carbon dioxide in addition to the carbon dioxide generated from the dough itself during fermentation can be dissolved in the dough. This increases the amount of the carbon dioxide dissolved in the dough to thereby quicken the fermentation time. In particular, to provide rich flavor, it is possible to shorten the time for fermentation at a temperature equal to or lower than the normal fermentation temperature (30 to 38°C), particularly a temperature equal to or lower than 25°C, thus improving the efficiency of making bread. Further, since reduction in the specific volume of baked bread can be prevented to improved the quality. Accordingly, rich-flavored bread can be manufactured easily and stably. Furthermore, since the amount of carbon dioxide dissolved in fermented dough can be increased, the specific volume of bread after baking can be increased and reduction in the specific volume of bread baked after long cryopreservation of fermented dough can be suppressed, thus improving long preservation of dough.

Besides, increasing the density of carbon dioxide in the atmosphere or providing a slightly positive pressure in the atmosphere further increases the amount of carbon dioxide dissolved in dough, so that the specific volume of baked bread can be increased and that the fermentation time can be quickened when baking bread of the same specific volume. Also, sufficient fermentation is possible due to the effect of replenishing carbon dioxide even in the case of using yeast with low fermentation performance at a low temperature. In other words, there is no need to increase the amount of yeast, and it is possible to produce bread with rich flavor and a significantly high quality.

The present apparatus for performing the above-mentioned method is characterized in that carbon dioxide supply means of supplying carbon dioxide into a dough fermenting vat is disposed in this fermenting vat.

Providing the carbon dioxide supply means, such as a carbon dioxide cylinder or dry ice, in the dough fermenting vat can easily produce a carbon-dioxide rich atmosphere for efficient fermentation of dough.

Brief Description of the Drawings

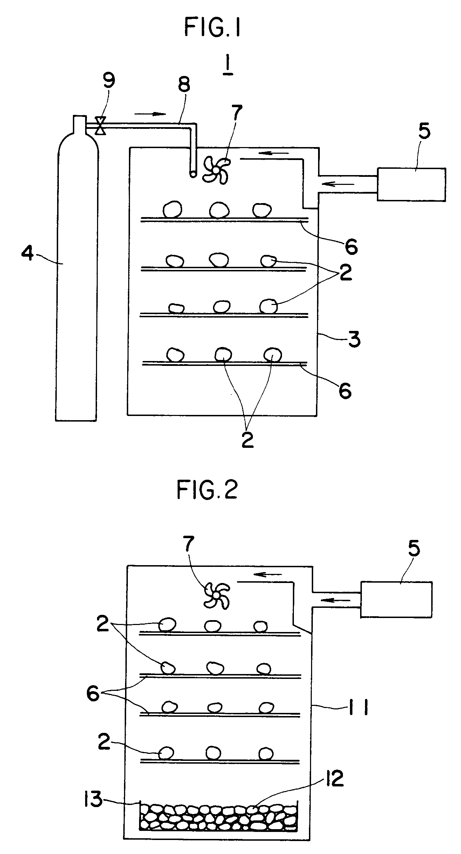

Figs. 1 and 2 illustrate the respective embodiments of an apparatus of the present invention, in which Fig.

1 is a diagram of a fermenting vat using a carbon dioxide cylinder, and Fig. 2 is a diagram of a fermenting vat using dry ice; and

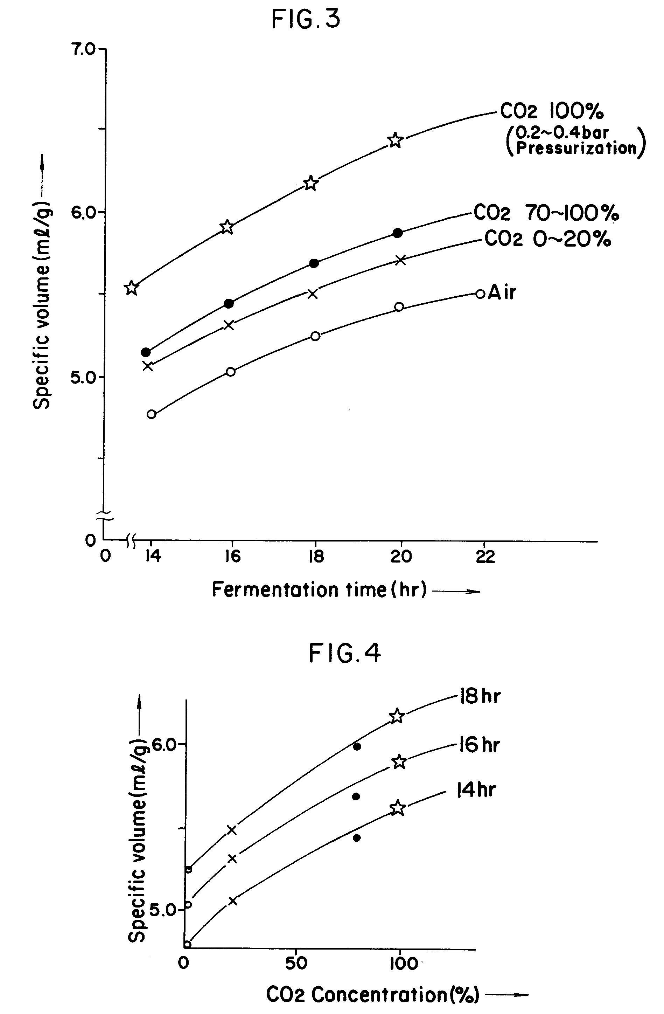

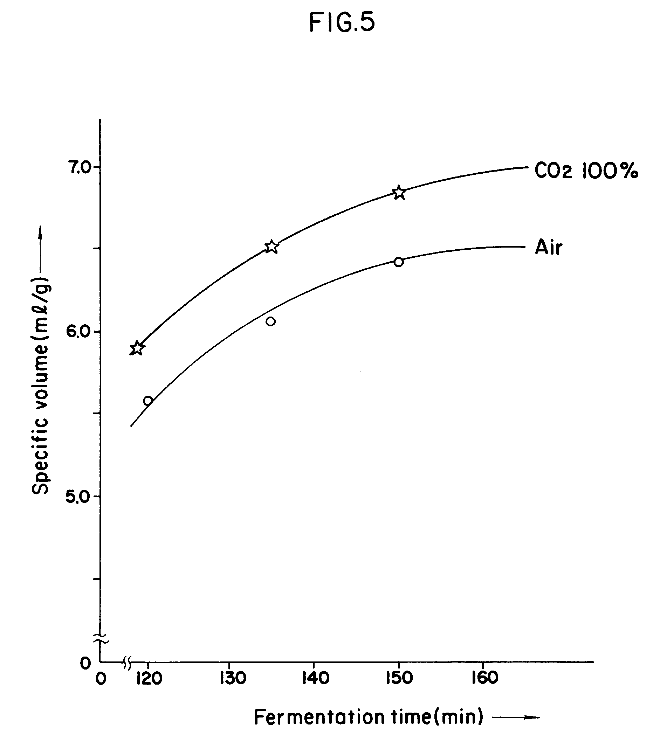

Figs. 3 to 5 illustrate the experiment results of a method of the present invention, in which Fig. 3 is a chart illustrating the relation between the fermentation time at a fermentation temperature of 5°C and the specific volume of bread after baking in Example 3, Fig. 4 is a chart illustrating the relation between the carbon dioxide density at a fermentation temperature of 5°C and the specific volume of bread after baking in Example 3, and Fig. 5 is a chart illustrating the relation between the fermentation time at a fermentation temperature of 20°C and the specific volume of bread after baking in Example 3.

## Best Modes of Carrying Out the Invention

Preferred embodiments of this invention will be described below.

Figs.1 and 2 illustrate the respective embodiments of the present apparatus. In Fig. 1, a dough fermenting apparatus 1 includes a fermenting vat 3 to store dough, a carbon dioxide cylinder 4 as means for supplying carbon dioxide into the fermenting vat 3, and a humidifier 5 for supplying water into the fermenting vat 3. Inside the fermenting vat 3, multiple shelves on which dough 2 is to be placed, are disposed in an up-and-down direction, and a fan 7 is disposed to provide a uniform atmosphere inside the fermenting vat 3. Also, a pipe 8 for supplying carbon dioxide into the vat 3 has a valve 9 provided therein for adjusting the amount of the carbon dioxide to be supplied.

The density of the carbon dioxide in the atmosphere in the fermenting vat 3 can be varied by controlling, with the valve 9, the flow rate or the pressure of carbon dioxide given from the carbon dioxide cylinder 4. Like in the conventional fermenting vats, the ambient temperature and humidity can be adjusted to be predetermined levels by control means, which includes temperature and humidity sensors, a freezer, a heater and the aforementioned humidifier 5.

Fig. 2 illustrates another embodiment of the fermenting apparatus. A storage 13 for dry ice 12 is provided as means for supplying carbon dioxide into a fermenting vat 11. The density of carbon dioxide in the atmosphere inside the fermenting vat 11 can be controlled within a predetermined range in accordance with the amount of the dry ice 12, the position of the storage 13, and the ambient temperature. The ambient temperature and humidity are also controlled by the proper means, as per the above-mentioned case.

To ferment dough using the above apparatus, lumps of dough 2 are placed on the shelves 6, then carbon dioxide is supplied into the fermenting vat 3 using the carbon dioxide supply means, such as the carbon dioxide cylinder 4 or the dry ice 12, and the temperature and the humidity are controlled by the control means, so as to ferment the dough 2 in the atmosphere of carbon dioxide.

In performing the present method, the carbon dioxide density in the atmosphere inside the above-described fermenting vat is not particularly limited. As long as the carbon dioxide density in the vat is higher than that in the outside air (about 0.033%), the effect can be expected. The higher the density, for example, in the atmosphere of 100% carbon dioxide, the greater the effect. The proper density range or the proper amount of carbon dioxide to be supplied can be selected, considering estimation of the effect, the cost-effectiveness, the degree of airtightness of the fermenting vat, etc.

Further, although a sufficient effect can be obtained even under the normal ambient pressure, providing a positive pressure state at which the pressure is slightly higher than the normal one (generally, 0.1 to 1 bar (1 bar=$10^5$Pa) higher) increases the osmosis of the carbon dioxide into dough, and thus produces a better effect.

Supplying carbon dioxide in the fermenting vat can easily provide the normal pressure to a slightly positive pressure, thus eliminating the need for a pump or the like for providing a pressurized or depressurized state and the need to increase the degree of the airtightness of the vat. This can ensure manufacturing of the apparatus at a low cost.

The method of the present invention will be described in more detail, based on some examples.

## Example 1

Bread-making was performed by the no-time method. 546 g of flour, 54 g of active gluten, 60 g of sugar, 9 g of salt, 24 g of powdered skim milk, 90 g of shortening, 42 g of yeast, 60 g of eggs, 0.72 g of yeast food (ascorbic acid base), and 285 g of water were prepared as the materials. After they were mixed well, the mixture was divided into lumps each of 35 g.

The lumps of dough were separated into two groups. One dough group A had been fermented 16.5 hours in the atmosphere with an increased carbon dioxide density of 0.4% at a temperature of 5°C. The pressure at the time of fermentation was normal or slightly positive due to the supplying of the carbon dioxide, etc.

On the other hand, the other dough group B had been fermented 16.5 hours at 5°C by the conventional method. Then, the amount of the carbon dioxide dissolved in the dough of each group was measured. Also, the fermented dough was baked ten minutes at 210°C, and then the specific volume [ml/g] of each baked bread was measured. Table 1 shows the measuring results.

Table 1

|  | Carbon dioxide density in the bread dough | Specific volume of bread after baking |
|---|---|---|
| Bread dough group A | 5.96 | 6.75 |
| Bread dough group B | 5.48 | 6.33 |

As shown in Table 1, the dough fermented by the present method has a higher density of the carbon dioxide contained therein, thus ensuring an increase in the specific volume of the baked bread.

Example 2

Both dough groups A and B, which had been fermented in Example 1, were frozen at -20°C, and wrapped with films. They were stored in the freezer at -20°C, and defrosted with time (at the room temperature for 25 minutes) and baked (at 210°C for 10 minutes). The specific volume [ml/g] of each resultant bread was measured. Table 2 illustrates the measuring results.

Table 2

| Day | 0 | 7 | 27 | 37 | 47 |
|---|---|---|---|---|---|
| Bread dough group A | 6.75 | 5.35 | 4.70 | 4.80 | 4.71 |
| Bread dough group B | 6.33 | 5.09 | 4.33 | 4.04 | - |

As shown in Table 2, with the dough which was fermented by the present method, bread baked even after long cryopreservation has a less reduction in specific volume.

Example 3

Bread-making was performed by the no-time method. 546 g of flour, 54 g of active gluten, 60 g of sugar, 9 g of salt, 24 g of powdered skim milk, 90 g of shortening, 36 g of yeast, 60 g of eggs, 0.72 g of yeast food (ascorbic acid base), and 285 g of water as the materials were added with 30 ppm of potassium bromate ($KBrO_3$). After they were mixed well, the mixture was divided into lumps each of 35 g. The lumps of dough were separated into four groups, and were fermented at a temperature of 5°C in four different atmospheres: (1) 0 to 20% of the carbon dioxide density (10% on average) under the normal pressure, (2) 70 to 100% of the carbon dioxide density under the normal pressure, (3) 100% of the carbon dioxide density under a pressure increased by 0.2 to 0.4 bar, and (4) the air. Then, the specific volume of each bread obtained by baking each dough ten

4

minutes at 210°C was was measured. Also, with the fermentation temperature being 20°C, comparison was made in the same manner between a case of the atmosphere of 100% of the carbon dioxide density and a case involved the air.

Figs. 3 to 5 show these results.

As shown in Fig. 3, with the same fermentation time, the higher the carbon dioxide density is, the greater the specific volume of the resultant bread becomes, and making the ambient pressure slightly positive can provide bread with a greater specific volume.

Further, as shown in Fig. 4, in the case of providing bread with the same specific volume, for example, a specific volume of 5.25 ml/g, fermentation takes 18 hours in the air, whereas it takes 16 hours with a carbon dioxide density of approximately 8% and 14 hours with a carbon dioxide density of approximately 50%

Finally, as shown in Fig. 5, the specific volume is increased even in the case of fermentation at 20°C. From comparison between the result of the 20°C case and the result of the 5°C case, a greater effect is observed with respect to fermentation at a low temperature.

## Claims

1. A method of fermenting dough characterized in that in fermenting dough at a low temperature equal to or lower than 25°C, said fermentation is executed in a carbon dioxide rich atmosphere under a normal pressure to a pressure greater by 1 bar than said normal pressure.

2. A method of fermenting dough according to claim 1, characterized in that said dough is cryopreserved after fermentation.

3. An apparatus of fermenting dough characterized in that carbon dioxide supply means for supplying carbon dioxide into a fermenting vat where dough is fermented, is provided in said fermenting vat.

4. An apparatus of fermenting dough according to claim 4, characterized in that said carbon dioxide supply means is a carbon dioxide cylinder communicating with said fermenting vat via a pipe or a valve.

5. An apparatus of fermenting dough according to claim 4, characterized in that said carbon dioxide supply means is dry ice disposed inside said fermenting vat.

## Patentansprüche

1. Verfahren zur Fermentierung von Teig, **dadurch gekennzeichnet**, daß bei der Fermentierung von Teig bei einer niedrigen Temperatur von gleich oder weniger als 25°C die Fermentierung in einer kohlendioxidreichen Atmosphäre unter Normaldruck bis zu einem um 1 bar größeren Druck als der Normaldruck durchgeführt wird.

2. Verfahren zur Fermentierung von Teig nach Anspruch 1, **dadurch gekennzeichnet**, daß der Teig nach der Fermentierung kryokonserviert wird.

3. Vorrichtung zur Fermentierung von Teig, **dadurch gekennzeichnet,** daß eine Kohlendioxidzufuhreinrichtung zur Zuführung von Kohlendioxid in einen Fermentationsbottich, in welchem Teig fermentiert wird, in dem Fermentationsbottich vorgesehen ist.

4. Vorrichtung zur Fermentierung von Teig nach Anspruch 4, **dadurch gekennzeichnet,** daß die Kohlendioxidzufuhreinrichtung ein Kohlendioxidzylinder ist, welcher mit dem Fermentationsbottich über eine Leitung oder ein Ventil kommuniziert.

5. Vorrichtung zur Fermentierung von Teig nach Anspruch 4, **dadurch gekennzeichnet,** daß die Kohlendioxidzufuhreinrichtung ein innerhalb des Fermentationsbottichs angeordnetes Trockeneis ist.

## Revendications

1. Procédé de fermentation de pâte, caractérisé en ce que, dans la pâte fermentant à une basse température, égale ou inférieure à 25°C, ladite fermentation est réalisée dans une atmosphère riche en dioxyde de carbone, sous une pression allant de la pression normale à une pression supérieure de 1 bar à ladite pression normale.

2. Procédé de fermentation de pâte selon la revendication 1, caractérisé en ce que ladite pâte est cryoconservée après fermentation.

3. Appareil pour la fermentation de pâte, caractérisé en ce que la source de dioxyde de carbone, pour alimenter en dioxyde de carbone la cuve de fermentation dans laquelle fermente la pâte, est disposée dans ladite cuve de fermentation.

4. Appareil pour la fermentation de pâte selon la revendication 3, caractérisé en ce que ladite source de dioxyde de carbone est une bouteille de dioxyde de carbone communiquant avec ladite cuve de fermentation par un conduit ou une vanne.

5. Appareil pour la fermentation de pâte selon la revendication 3, caractérisé en ce que ladite source de dioxyde de carbone est du carboglace disposé, à l'intérieur de ladite cuve de fermentation.

FIG.1

FIG.2

## FIG.3

## FIG.4

FIG.5